# FASCICULE DE BREVET EUROPEEN

(11) **EP 3 202 980 B1**
(45) Date de publication et mention de la délivrance du brevet: **13.03.2019**
(21) Numéro de dépôt: 17152193.3
(22) Date de dépôt: 19.01.2017
(51) Int. Cl.: E01B 29/28, B25B 23/145

(54) **PROCÉDE D'ÉTALONNAGE D'UNE MACHINE DE SERRAGE D'ATTACHES VISSÉES DE RAILS D'UNE VOIE FERRÉE, NOTAMMENT AVEC TIREFONDS OU ÉCROUS, SYSTÈME POUR LA MISE EN OEUVRE DU PROCÉDE ET MACHINE EQUIPÉE D'UN TEL SYSTÈME**
VERFAHREN ZUR EINSTELLUNG EINER MASCHINE ZUM FESTZIEHEN VON MIT BOLZEN BEFESTIGTEN HALTERUNGEN VON SCHIENEN EINES BAHNGLEISES, INSBESONDERE MIT STOCKSCHRAUBEN ODER MUTTERN, SYSTEM ZUR UMSETZUNG DIESES VERFAHRENS UND MIT EINEM SOLCHEN SYSTEM AUSGESTATTETE MASCHINE
METHOD FOR CALIBRATING A MACHINE FOR TIGHTENING SCREWED RAIL FASTENERS OF A RAILWAY TRACK, IN PARTICULAR WITH LAG SCREWS OR NUTS, SYSTEM FOR IMPLEMENTING THE METHOD AND MACHINE PROVIDED WITH SUCH A SYSTEM

(30) Priorité: 04.02.2016 FR 1650896
(43) Date de publication de la demande: 09.08.2017
(73) Titulaire: Societe Turripinoise de Mecanique SA., 38110, Saint Didier de la Tour (FR)
(72) Inventeur: GEISMAR, Raphaël, 92200 Neuilly sur Seine (FR)
(74) Mandataire: Berger, Helmut

(56) Documents cités:
- EP-A1- 1 201 826
- WO-A1-2006/058552
- FR-A1- 2 745 216
- FR-A1- 3 021 673
- JP-A- H1 161 706

## Description

L'invention concerne un procédé d'étalonnage d'une machine de serrage d'attaches vissées de rails d'une voie ferrée avec tirefonds ou écrous, pourvu d'un dispositif de réglage du couple de serrage en fonction d'un couple de consigne ainsi qu'un système pour la mise en oeuvre du procédé et une machine équipée d'un tel système.

Il est connu d'étalonner le couple de serrage d'une machine de tirefonnage en usine ou sur chantier. Mais les procédures d'étalonnage connues présentent des inconvénients importants. Tout d'abord l'étalonnage est pénible car il nécessite d'effectuer un certain nombre de cycles de couple de serrage, afin de pouvoir déterminer le couple de serrage correspondant et d'enregistrer manuellement toutes les valeurs dans le boîtier de commande de la machine. D'autre part, l'étalonnage exige l'utilisation d'un matériel coûteux et complexe tel qu'un banc mécanique à aiguille, étalonné par clés dynamométriques, elles-mêmes étalonnées par un organisme extérieur, ou un contrôleur de couple digital. De plus, les bancs d'étalonnage actuels simulent un seul type d'attache de raideur le plus souvent souple. En réalité, la raideur varie d'un type d'attache à un autre et en fonction de sa valeur de serrage. Un même type d'attache peut également varier d'un chantier à un autre en fonction de son environnement. Un procédé selon le préambule de la revendication 1 et un système selon le préambule de la revendication 5 sont connus de FR 2 745 216 A1 et de FR 3 021 673 A1.

L'invention a pour but de proposer une machine de serrage de tirefonds ou d'écrous qui ne présente pas les inconvénients susmentionnés.

Pour atteindre ce but, le procédé selon l'invention est caractérisé en ce que l'on effectue l'étalonnage, sur le chantier où se trouvent les tirefonds ou les écrous à serrer en réglant le couple de serrage de consigne C en fonction du couple de serrage réel (CR) appliqué aux tirefonds ou écrous, et que l'on mesure, au moyen d'un capteur monté directement et de manière amovible entre l'arbre moteur de transmission de couple de serrage et le tirefond ou l'écrou à serrer, dans une boucle d'asservissement fermée, de façon automatique.

Selon une caractéristique de l'invention, le procédé est caractérisé en ce que l'on indique le couple de consigne C et le couple de serrage réel CR à un comparateur (23) et corrige la valeur de couple de consigne (C) en fonction de l'écart (e) résultant de la comparaison, pour obtenir un couple de consigne corrigé (CC) destiné à commander le dispositif de réglage (31), pour réduire avantageusement l'écart entre les couples de consigne et le couple réel.

Selon une autre caractéristique de l'invention, le procédé est caractérisé en ce que l'étalonnage comporte plusieurs cycles de serrage chaque fois d'attache différent de même type, et en ce que la machine est étalonnée à la fin des cycles en utilisant une valeur moyenne des couples réels des différents cycles ou la valeur moyenne des coefficients de correction des cycles.

Selon encore une autre caractéristique de l'invention, le procédé est caractérisé en ce que les valeurs moyennes précitées sont mémorisées.

Le système d'étalonnage du couple de serrage d'une machine de serrage de d'attaches vissées, notamment de tirefonds ou d'écrous des rails d'une voie ferrée est caractérisé en ce qu'il comprend un capteur de couple réel 22 monté entre l'arbre de transmission des couples de serrage produits par le moteur hydraulique, et le tirefond ou l'écrou à serrer, un comparateur des couples de consigne C et de serrage réel CR, un dispositif de correction d'établissement d'un couple de consigne corrigées CC, en fonction de l'écart constaté par le comparateur entre les couples de consigne C et de serrage réel CR, et en ce que le capteur, le comparateur, le dispositif de correction et le dispositif de réglage sont montés en série dans une boucle d'asservissement fermée.

Selon une caractéristique avantageuse de l'invention, le système est caractérisé en ce qu'il comprend un dispositif de calcul et de mémorisation, qui est disposé dans la boucle d'asservissement entre le capteur et le comparateur et adapté pour calculer les valeurs moyennes CRM des couples réels CR.

Selon encore une autre caractéristique, le système est caractérisé en ce que le capteur 22 est monté de manière amovible entre l'arbre moteur de transmission de couple de serrage 21 et le tirefond ou l'écrou à serrer.

La machine de serrage de tirefonds ou d'écrous ou tirefonds, notamment des rails d'une voie ferrée est caractérisée en ce qu'elle comprend le système selon l'invention.

Selon une autre caractéristique de l'invention, la machine est caractérisée en ce qu'elle comprend un moteur électrique ou thermique et un moteur hydraulique de serrage qui est entrainé par le moteur électrique ou thermique par l'intermédiaire d'un groupe hydraulique et d'une électrovanne de réglage du débit du liquide d'alimentation du moteur hydraulique.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- La figure 1 est une vue d'une machine de serrage de tirefonds ou d'écrous selon l'invention ;
- la figure 2 montre le schéma synoptique fonctionnel général du système d'étalonnage d'une machine selon l'invention ; et
- la figure 3 montre le schéma synoptique fonctionnel d'un système d'étalonnage d'une machine de serrage de tirefonds ou d'écrous notamment d'une voie ferrée selon l'invention.

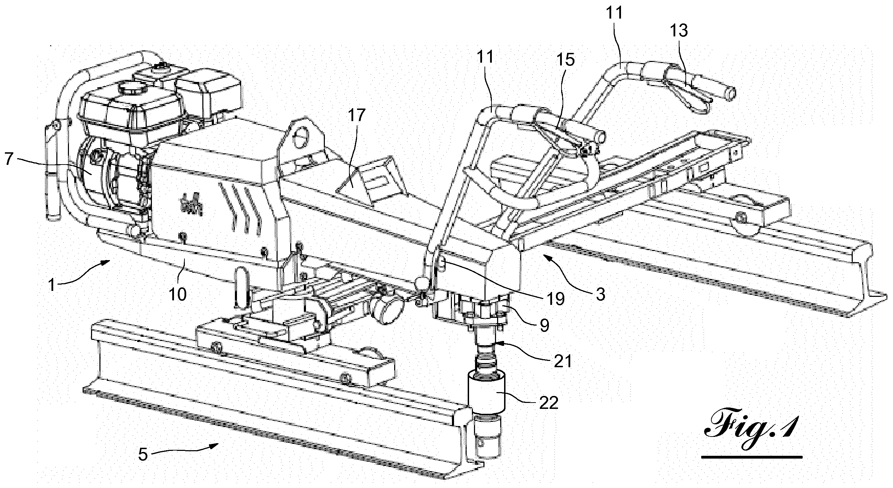

L'invention sera décrite ci-après à titre d'exemple non limitatif, dans une application à une machine de serrage de de tirefonds ou d'écrous sur rails ferroviaires, appelée tirefonnage ou machine de tirefonnage, telle que représentée sur la figure 1. Conformément à l'invention, cette machine est équipée d'un système d'étalonnage qui permet l'étalonnage de la machine sur une valeur de consigne prédéterminée, sur le chantier même sur lequel la machine est utilisée.

Selon la figure 1, la machine de tirefonnage notée 1 comprend un chariot 3 qui permet le déplacement de la machine sur les rails 5 d'une voie ferrée, par un opérateur, un moteur électrique ou thermique 7 destiné à entrainer en rotation un moteur hydraulique 9, par l'intermédiaire d'un groupe hydraulique dont le réservoir d'huile hydraulique est indiqué en 10. Les références 11, 13, 17 désignent respectivement les bras de commande de la machine et les poignées de commande de vissage et de dévissage. La référence 17 indique un boîtier de commande pourvu d'un clavier permettant l'inscription des valeurs de couple de consigne et d'un cadran d'affichage.

L'arbre de transmission du couple de serrage aux tirefonds ou écrous (non représentés), produit par le moteur 7 est représenté, de façon schématique en 21. Ce qui est important dans le cadre de la présente invention, c'est qu'il est pourvu d'un capteur qui mesure le couple de serrage appliqué aux tirefonds, c'est-à-dire du couple de serrage réel. Le capteur est désigné, de façon générale, par la référence 22. Ce capteur peut être de toute nature connue appropriée, mais pourrait être du type de capteur décrit dans la demande de brevet français n° 14/54967 (voir publication FR 3 021 673 A1), appelé aussi clé instrumentée. Le capteur est directement monté entre l'arbre de transmission et le tirefond ou l'écrou à serrer, mais de façon amovible.

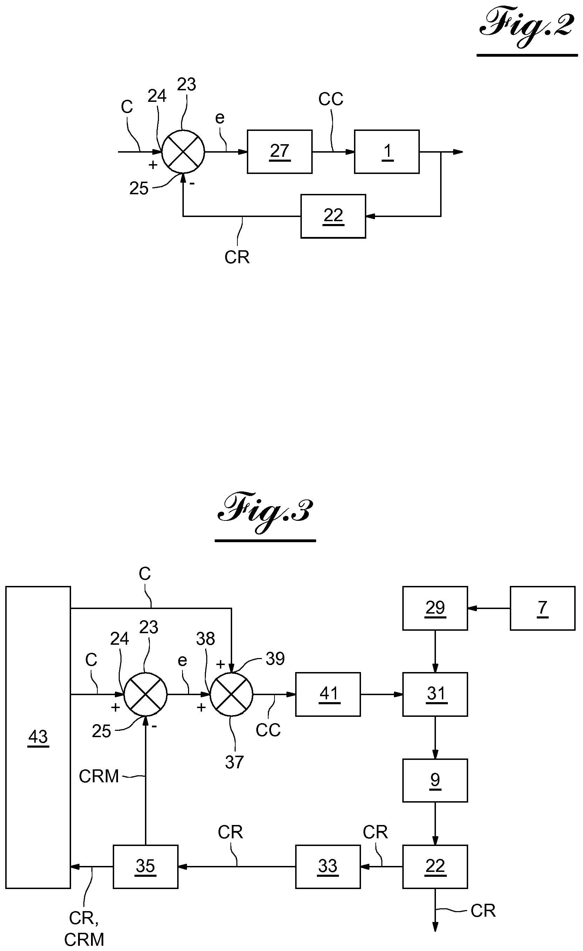

Conformément à l'invention, la machine est équipée d'un système d'étalonnage automatique du couple de serrage maximal à transmettre aux tirefonds ou écrous, qui sera décrit ci-après en se référant aux figures 2 et 3.

La figure 2 illustre le schéma synoptique fonctionnel général du système et démontre les différentes étapes du procédé d'étalonnage selon l'invention et les différents dispositifs structurels et/ou fonctionnels de la mise en oeuvre.

Comme le montre la figure, la machine de tirefonnage 1 avec le capteur du couple réel 22 est montée dans une boucle d'asservissement fermée qui comporte également un comparateur 23 de la valeur du couple de serrage de consigne C et de la valeur du couple de serrage réel CR mesuré par le capteur 22, qui sont reçus respectivement aux entrées 24 et 25 du comparateur. La valeur de différence e établie par le comparateur est transmise à un dispositif correcteur de la valeur de couple, noté 27, qui applique à la machine 1 la valeur de couple de consigne corrigée CC. En fonction du couple de consigne corrigé CC, la machine 1 génère un couple de serrage modifié dont la valeur sera à nouveau transmise par le capteur de couple réel 22 au comparateur, jusqu'à ce que le couple de serrage réel CR correspond au couple de consigne C.

Alors que la figure 2 illustre le système d'étalonnage selon l'invention dans sa version générale utilisable pour toute machine de serrage de boulons ou encore plus général pour toute machine destinée à produire un couple de sortie d'une valeur prédéterminée, en fonction d'un couple de consigne, la figure 3 montre le système dans son application à une machine du type représenté à la figure 1, comprenant un moteur électrique ou thermique 7 qui commande un moteur hydraulique 9, par l'intermédiaire d'un groupe hydraulique 29 et d'un dispositif de réglage du couple de serrage, constitué d'un limiteur de pression proportionnel électrique/hydraulique 31, interposé entre le groupe hydraulique 29 et le moteur hydraulique 9. Le moteur hydraulique produit le couple de serrage qui sera appliqué au tirefond et mesuré par le capteur de couple 22, à savoir le couple de serrage seul CR.

Plus précisément, le capteur de couple 22 transmet le couple réel CR, sous forme d'un signal analogique, à un convertisseur analogique/numérique 33 destiné à convertir la valeur de couple analogique en une valeur de couple numérique qui est appliqué à un dispositif calculateur et de mémorisation 35. Le comparateur 23 établit à partir de la valeur de couple de consigne C et de la valeur de couple réel reçu du dispositif 35 la valeur d'écart sous forme d'un coefficient de correction, qui est avantageusement mais non pas obligatoirement, une valeur de couple moyenne CRM, comme il sera expliqué plus loin et qui sera appliqué à un dispositif 37 destinée à établir à partir du signal d'écart e reçu à son entrée 38 et de la valeur de consigne C qu'il reçoit à son entrée 39, la valeur de couple de consigne corrigée CC. Celui-ci présenté comme signal analogique est converti par un convertisseur numérique/analogique 41 en une valeur analogique à appliquer à l'électrovanne 31.

Il est à noter que les convertisseurs 33 et 41, le dispositif calculateur et de mémorisation 35, le comparateur 23 et le dispositif de correction 37 sont montés en série dans la boucle d'asservissement et disposés dans le boîtier de commande de la machine, pourvu de son dispositif clavier/afficheur 43 permettant l'inscription par l'opérateur et la visualisation du couple de consigne C.

Dans un mode de réalisation avantageux de l'invention, après le serrage d'un premier tirefond selon le procédé décrit ci-dessus, on procède ensuite au serrage d'un certain nombre d'autres tirefonds, avantageusement d'au moins cinq tirefonds, toujours selon le procédé décrit ci-dessus. Ainsi, le procédé d'étalonnage comprend plusieurs cycles de serrage, chaque fois bien entendu d'un autre tirefond ou écrou de même type. Cependant, dans ce mode de réalisation, également donné uniquement à titre d'exemple non limitatif, lors du cycle de serrage du second tirefond, le dispositif de calcul et de mémorisation 35 envoie au comparateur 23 non pas la valeur de couple réelle mesuré par le capteur de couple 22, mais la valeur moyenne qu'il a calculé à partir des deux valeurs de couple réelles établies lors de serrage du premier et du second tirefond. Puis, lors du serrage d'un troisième tirefond, le dispositif calculateur et de mémorisation 35 calcule la valeur moyenne des deux couples réels des premier et second serrages et de la valeur réelle du troisième serrage. Ensuite, lors de chaque cycle de serrage d'un nouveau tirefond, le dispositif de calcul et de mémorisation envoie au comparateur la valeur moyenne des cycles de serrage précédent et du présent cycle présent.

Une autre possibilité de mise en oeuvre de l'invention pourrait consister à établir les valeurs moyennes des coefficients de correction établies par le comparateur lors des différents cycles de serrage de tirefonds.

La machine conserve seulement les valeurs cohérentes et moyennes des couples réels et/ou des écarts afin d'appliquer le coefficient correcteur le plus approprié. Une fois la procédure d'étalonnage de la machine validée, on sort du mode d'étalonnage automatiquement, et retire le capteur de couple 22 de l'arbre de transmission de couple de la machine. La machine est alors prête pour commencer le serrage des tirefonds de la voie en régime de travail normal. Il est à noter que la valeur de couple de consigne est en général le couple maximal devant être appliqué aux tirefonds ou écrous du même type sur le chantier.

Il ressort de la description de l'invention, qui précède, que celle-ci procure des avantages majeurs par rapport aux systèmes et procédés d'étalonnage connus. Ces systèmes connus, ne permettent pas un étalonnage directement sur le lieu de travail en prenant en compte des particularités du terrain et des tirefonds et attaches. Contrairement au système connu, l'invention propose un système et un procédé d'étalonnage automatique qui, lors du processus d'étalonnage prend en compte toutes les spécificités et conditions de travail sur le chantier. En comparaison à l'invention, les systèmes connus n'effectuent qu'un pré-étalonnage c'est-à-dire approximatif, ayant pour conséquence un serrage d'une faible précision. De plus, l'étalonnage selon l'invention s'effectuant d'une façon automatique, l'intervention de l'opérateur se limite à l'inscription des couples de consigne.

## Revendications

1. Procédé d'étalonnage d'une machine de serrage d'attaches, de rails d'une voie ferrée avec tirefonds ou écrous, pourvu d'un dispositif de réglage du couple de serrage en fonction d'un couple de consigne, **caractérisé en ce que** l'on effectue l'étalonnage, sur le chantier où se trouvent les tirefonds ou écrous à serrer, en réglant le couple de serrage de consigne (C) en fonction du couple de serrage réel (CR) appliqué aux tirefonds ou écrous, et que l'on mesure, au moyen d'un capteur (22) monté directement et de manière amovible entre l'arbre moteur de transmission de couple de serrage (21) et le tirefond ou l'écrou à serrer, dans une boucle d'asservissement fermée, de façon automatique.

2. Procédé selon la revendication 1, **caractérisé en ce que** l'on indique le couple de consigne (C) et le couple de serrage réel (CR) à un comparateur (23) et corrige la valeur de couple de consigne (C) en fonction de l'écart (e) résultant de la comparaison, pour obtenir un couple de consigne corrigé (CC) destiné à commander le dispositif de réglage (31), pour réduire avantageusement l'écart entre les couples de consigne et le couple réel.

3. Procédé selon la revendication 1, **caractérisé en ce que** l'étalonnage comporte plusieurs cycles de serrage chaque fois d'un d'attache différent de même type, et **en ce que** la machine est étalonnée à la fin des cycles en utilisant une valeur moyenne des couples réels des différents cycles ou la valeur moyenne des coefficients de correction des cycles.

4. Procédé selon la revendication 3, **caractérisé en ce que** les valeurs moyennes précitées sont mémorisées.

5. Système d'étalonnage du couple de serrage d'une machine de serrage d'attaches vissées, notamment de tirefonds ou d'écrous des rails d'une voie ferrée, **caractérisé en ce qu'**il comprend un capteur de couple réel (22) monté entre l'arbre (21) de transmission des couples de serrage produits par le moteur hydraulique, aux tirefonds ou écrous à serrer, un comparateur (23) des couples de consigne (C) et de serrage réel (CR), un dispositif de correction d'établissement (27) d'un couple de consigne corrigées (CC), en fonction de l'écart constaté par le comparateur (23) entre les couples de consigne (C) et de serrage réel (CR), et **en ce que** le capteur (22), le comparateur (23), le dispositif de correction (27) et le dispositif de réglage (31) sont montés en série dans une boucle d'asservissement fermée.

6. Système selon la revendication 5, **caractérisé en ce qu'**il comprend un dispositif de calcul et de mémorisation (25), qui est disposé dans la boucle d'asservissement entre le capteur (22) et le comparateur (23) et adapté pour calculer les valeurs moyennes (CRM) des couples réels (CR).

7. Système selon l'une des revendications 5 ou 6, **caractérisé en ce que** le capteur (22) est monté de manière amovible entre l'arbre de transmission de couple de serrage (21) et le tirefond ou l'écrou à serrer.

8. Machine de serrage de tirefonds ou d'écrous, notamment des rails d'une voie ferrée, **caractérisée en ce qu'**elle comprend un système selon l'une des revendications 5 à 7.

9. Machine selon la revendication 8, **caractérisé en ce qu'**elle comprend un moteur électrique ou thermique (7) et un moteur hydraulique (9) de serrage qui est entrainé par le moteur électrique ou thermique (7) par l'intermédiaire d'un groupe hydraulique (29) et d'une électrovanne (31) de réglage du débit du liquide d'alimentation du moteur hydraulique (9).

## Patentansprüche

1. Verfahren zur Einstellung einer Maschine zum Festziehen von Halterungen von Schienen eines Bahngleises mit Stockschrauben oder Muttern, ausgestattet mit einer Vorrichtung zur Regelung des Festziehdrehmoments in Abhängigkeit von einem Solldrehmoment, **dadurch gekennzeichnet, dass** die Einstellung auf der Baustelle durchgeführt wird, wo sich die festzuziehenden Stockschrauben oder Muttern befinden, indem das Solldrehmoment (C) in Abhängigkeit vom tatsächlichen Drehmoment (CR) geregelt wird, das auf die Stockschrauben oder Muttern aufgebracht wird, das mit Hilfe eines Sensors (22), der direkt und abnehmbar zwischen der Motorwelle zur Übertragung des Festziehdrehmoments (21) und der festzuziehenden Stockschraube oder Mutter in einem geschlossenen Regelkreis montiert ist, automatisch gemessen wird.

2. Verfahren nach Anspruch 1, **dadurch gekennzeichnet, dass** das Solldrehmoment und das tatsächliche Drehmoment (CR) einem Vergleicher (23) angegeben werden und der Wert des Solldrehmoments (C) je nach der Abweichung (e) korrigiert wird, die sich aus dem Vergleich ergibt, um ein korrigiertes Solldrehmoment (CC) zu erhalten, das dazu bestimmt ist, die Vorrichtung zur Einstellung (31) zu steuern, um in vorteilhafterweise die Abweichung zwischen dem Solldrehmoment und dem tatsächlichen Drehmoment zu reduzieren.

3. Verfahren nach Anspruch 1, **dadurch gekennzeichnet, dass** die Einstellung mehrere Festziehzyklen jedes Mal von einer verschiedenen Halterung vom gleichen Typ umfasst, und dadurch, dass die Maschine am Ende der Zyklen unter Verwendung eines mittleren Werts der tatsächlichen Drehmomente der verschiedenen Zyklen oder des mittleren Werts des Korrekturkoeffizienten der Zyklen eingestellt wird.

4. Verfahren nach Anspruch 3, **dadurch gekennzeichnet, dass** die vorgenannten mittleren Werte gespeichert werden.

5. System zur Einstellung des Festzugsdrehmoments einer Maschine zum Festziehen von geschraubten Halterungen, insbesondere Stockschrauben oder Muttern von Schienen eines Bahngleises, **dadurch gekennzeichnet, dass** es einen Sensor des tatsächlichen Drehmoments (22), der zwischen der Welle (21) zur Übertragung der Festziehdrehmomente, erzeugt durch den hydraulischen Motor, an die festzuziehenden Stockschrauben oder Muttern montiert ist, einen Vergleicher (23) der Solldrehmomente (C) und der tatsächlichen Drehmomente (CR), eine Vorrichtung zur Korrektur der Festsetzung (27) eines korrigierten Solldrehmoments (CG) in Abhängigkeit von der Abweichung (e), die vom Vergleicher (23) zwischen den Solldrehmomenten (C) und den tatsächlichen Drehmomenten (CR) festgestellt wird, besitzt, und dadurch, dass der Sensor (22), der Vergleicher (23), die Korrekturvorrichtung (27) und die Vorrichtung zur Regelung (31) in Reihe in einem geschlossenen Regelkreis montiert sind.

6. System nach Anspruch 5, **dadurch gekennzeichnet, dass** es eine Vorrichtung zum Berechnen und zum Speichern (25) umfasst, die im Regelkreis zwischen dem Sensor (22) und dem Vergleicher (23) angeordnet und ausgelegt ist, um die mittleren Werte (CRM) der tatsächlichen Drehmomente (CR) zu berechnen.

7. System nach einem der Ansprüche 5 oder 6, **dadurch gekennzeichnet, dass** der Sensor (22) auf abnehmbare Weise zwischen der Welle zur Übertragung des Festziehdrehmoments (21) und der festzuziehenden Stockschraube oder Mutter montiert ist.

8. Maschine zum Festziehen von Stockschrauben oder Muttern, insbesondere von Schienen eines Bahngleises, **dadurch gekennzeichnet, dass** es ein System nach einem der Ansprüche 5 bis 7 umfasst.

9. Maschine nach Anspruch 8, **dadurch gekennzeichnet, dass** sie einen elektrischen oder thermischen Motor (7) und einen hydraulischen Motor (9) zum Festziehen umfasst, der durch den elektrischen oder thermischen Motor (7) mit Hilfe einer hydraulischen Gruppe (29) und eines Elektroventils (31) zur Einstellung des Durchsatzes der Flüssigkeit zur Versorgung des hydraulischen Motors (9) angetrieben wird.

## Claims

1. A method for calibrating a machine for tightening rail fasteners of a railway track with lag screws or nuts, provided with a device for adjusting the tightening torque based on an input torque, **characterized in that** the calibration is done, on the worksite where the lag screws or nuts to be tightened are located, by adjusting the input tightening torque (C) as a function of the actual tightening torque (CR) applied to the lag screws or nuts, and **in that** one measures, using a sensor (22) mounted directly and removably between the tightening torque transmission drive shaft (21) and the lag screw or the nut to be tightened, in a closed feedback loop, automatically.

2. The method according to claim 1, **characterized in that** the input torque (C) and the actual tightening torque (CR) are indicated to a comparator (23) and the input torque value (C) is corrected as a function of the deviation (e) resulting from the comparison, in order to obtain a corrected input torque (CC) intended to command the adjusting device (31), advantageously to reduce the deviation between the input torques and the actual torque.

3. The method according to claim 1, **characterized in that** the calibration includes several tightening cycles, each time for a different fastener of the same type, and **in that** the machine is calibrated at the end of the cycles using an average value of the actual torques of the different cycles or the average value of the correction coefficients of the cycles.

4. The method according to claim 3, **characterized in that** the aforementioned average values are stored.

5. A system for calibrating the tightening torque of a machine for tightening screwed fasteners, in particular lag screws or nuts of rails of a railway track, **characterized in that** it comprises an actual torque sensor (22) mounted between the transmission shaft (21) of the tightening torques produced by the hydraulic motor, to the lag screws or nuts to be tightened, a comparator (23) of the input (C) and actual tightening (CR) torques, an establishment correction device (27) for a corrected input torque (CC), as a function of the deviation observed by the comparator (23) between the input (C) and actual tightening (CR) torques, and **in that** the sensor (22), the comparator (23), and the correction device (27) and the adjusting device (31) are mounted in series in a closed feedback loop.

6. The system according to claim 5, **characterized in that** it comprises a computing and storage device (25), which is arranged in the feedback loop between the sensor (22) and the comparator (23) and suitable for computing the average values (CRM) of the actual torques (CR).

7. The system according to one of claims 5 or 6, **characterized in that** the sensor (22) is mounted removably between the tightening torque transmission shaft (21) and the lag screw or the nut to be tightened.

8. A machine for tightening lag screws or nuts, in particular rails of a railway track, **characterized in that** it comprises a system according to one of claims 5 to 7.

9. The machine according to claim 8, **characterized in that** it comprises an electric or heat engine (7) and a hydraulic tightening motor (9) that is driven by the hydraulic or heat engine (7) via a hydraulic power pack (29) and a solenoid valve (31) for adjusting the flow rate of supply fluid of the hydraulic motor (9).
